# EUROPÄISCHE PATENTSCHRIFT

(11) **EP 3 994 360 B1**
(45) Veröffentlichungstag und Bekanntmachung des Hinweises auf die Patenterteilung: **30.07.2025**
(21) Anmeldenummer: 20734364.1
(22) Anmeldetag: 22.06.2020
(51) Int. Cl.: F04D 29/041, F04D 29/043, F04D 29/20

(54) **PUMPENWELLE FÜR EINE MEHRSTUFIGE PUMPE**
PUMP SHAFT FOR A MULTI-STAGE PUMP
ARBRE DE POMPE POUR UNE POMPE À ÉTAGES MULTIPLES

(30) Priorität: 01.07.2019 DE 102019004539
(43) Veröffentlichungstag der Anmeldung: 11.05.2022
(73) Patentinhaber: KSB SE & Co. KGaA, 67227 Frankenthal (DE)
(72) Erfinder: GROSS, Gerhard, 67227 Frankenthal (DE); MOLITOR, Kai, 67227 Frankenthal (DE); SERGI, Sophia, 67227 Frankenthal (DE)
(86) Internationale Anmeldenummer: PCT/EP2020/067302
(87) Internationale Veröffentlichungsnummer: WO 2021/001191

(56) Entgegenhaltungen:
- EP-A1- 3 412 915
- CH-A- 376 774
- CN-A- 109 469 624
- US-A- 1 499 056
- US-A- 5 655 849
- US-A1- 2017 248 001

## Beschreibung

Die vorliegende Erfindung betrifft eine Pumpenwelle für eine mehrstufige Pumpe sowie eine Pumpe mit einer solchen Pumpenwelle.

Bei Pumpen, insbesondere bei Kreiselpumpen wird mithilfe einer rotierenden Welle ein zu pumpendes Fluid angesaugt und durch ein mittels der Welle rotierend angetriebenes Laufrad weggefördert.

Da bei mehrstufigen Pumpen sich an den Laufrädern - bedingt durch die Laufradeintrittsöffnung - an der Saugseite ein geringerer Druck und damit eine geringere Kraft in axialer Richtung ausbildet, entsteht Richtung Saugseite des Laufrades immer eine Axialkraft. Diese Axialkraft der Laufräder wird in die Welle eingeleitet. Damit die Welle ortsfest im Gehäuse gehalten werden kann, wird eine hydraulisch erzeugte Gegenkraft mittels einer Entlastungseinrichtung in die Pumpenwelle eingebracht.

Bei den mehrstufigen Pumpen ist die Entlastungseinrichtung durch einen geteilten Ring und eine Halteringnut in der Pumpenwelle mit der Welle verbunden. Das Eingreifen in diese Nut verhindert die unerwünschte Axialverschiebung von der Pumpenwelle zum Gehäuse.

Nachteilhaft hieran ist, dass es selten bis gelegentlich zu Wellenbrüchen an dieser Stelle kommt. Dies ist Beleg für eine gewisse Schwachstelle der Welle durch die Halteringnut. Da im Energieerzeugungsbereich die mehrstufigen Pumpen seit ein paar Jahren immer häufiger gestoppt und wieder gestartet werden, wird die Halteringnut mechanisch sehr belastet, so dass hierin ein wachsendes und ernstes Verfügbarkeitsproblem von dauerfesten Pumpen unter den sich geänderten Betriebsbedingungen gesehen wird. So wird oftmals nicht mehr der erforderliche Sicherheitsbeiwert gegen Dauerbruch erreicht.

Die CH 376 774 A beschreibt beispielsweise eine Entlastungseinrichtung, durch welche der von einer Entlastungsscheibe aufgenommene Axialschub mit Hilfe in Ringnuten der Welle liegender, Schubringe auf diese übertragen wird, wobei der in ihrer Lage gegenüber der Welle festliegenden, sich gegen einen Schubring abstützenden Entlastungsscheibe ein ihr gegenüber axial bewegliches Hilfsglied vor- oder nachgeschaltet ist, welches einen Teil des Axialschubes auf einen weiteren Schubring überträgt, und das axial bewegliche Hilfsglied: (6) an der Entlastungsscheibe (5) derart geführt und ihr gegenüber abgedichtet ist, dass zwischen diesen beiden Teilen ein Raum gebildet wird, in welchem durch entsprechende Bohrungen der Druck hinter bzw. vor der Entlastungsscheibe herrscht.

Die US 1,499,056 A zeigt eine Pumpe mit einem Gehäuse, das aus zwei in Längsrichtung trennbaren Hälften besteht. Die Pumpe umfasst eine Ansaugkammer an der Saugseite der Pumpe und einer Hochdruckkammer auf der Druckseite der Pumpe. Die Pumpe weist zudem eine Druckausgleichskammer am Auslassende der Pumpe auf, die mit der Hochdruckauslasskammer in Verbindung steht. Eine Schubausgleichsscheibe ist starr auf der Welle in einer Ausgleichsdruckkammer angeordnet. Eine Gegenausgleichsdruckkammer ist auf der der Ausgleichsdruckkammer gegenüberliegenden Seite der Scheibe vorgesehen, wobei die Scheibe die Verbindung zwischen den beiden Kammern steuert. Die Pumpe umfasst ferner einen umkehrbaren Druckring und eine Aufnahme für die Scheibe, wobei der Druckring an seinem äußeren Rand mit einer Nut versehen ist und das Pumpengehäuse mit einer geteilten Rippe versehen ist, die sich um die Innenseiten seiner beiden Hälften erstreckt und in der Nut des Druckrings aufgenommen werden kann.

Weitere Beispiele sind aus den Schriften CN 109 469 624 A und US 2017/248001 A1 bekannt.

Es ist das Ziel der vorliegenden Erfindung, diesen Nachteil zu überwinden. Dies gelingt mit einer Pumpenwelle, die sämtliche Merkmale des Anspruchs 1 aufweist oder mit einer Pumpe nach Anspruch 9 . Die Erfindung verbessert diese Schwachstelle deutlich und erreicht unter anderem eine deutliche verbesserte Dauerfestigkeit der Pumpenwelle. Weitere vorteilhafte Ausgestaltungen der Erfindung sind in den abhängigen Ansprüchen formuliert.

Nach der Erfindung ist vorgesehen, dass die Pumpenwelle für eine mehrstufige Pumpe, insbesondere eine Kreiselpumpe, einen umlaufenden Nutbereich zum Eingreifen einer Entlastungseinrichtung umfasst, um eine in Axialrichtung der Pumpenwelle wirkende Kraft in die Pumpenwelle einzuleiten. Die Pumpenwelle zeichnet sich dadurch aus, dass der Nutbereich in einer Längsschnittansicht der Pumpenwelle mehrere in Axialrichtung voneinander beabstandete Nuten aufweist.

Anders als nach dem vorbekannten Stand der Technik ist nun die Halteringnut zum Eingreifen einer Entlastungseinrichtung nicht mehr nur durch eine einzelne Nut gebildet, sondern umfasst bei Betrachtung entlang eines Längsschnittrichtung der Pumpenwelle eine Vielzahl von nebeneinander angeordneten Nuten. Durch das Vorsehen der mehreren in Axialrichtung der Pumpenwelle nebeneinander angeordneten Nuten ist es möglich, die Querschnittsfläche der Pumpenwelle im Nutbereich größer zu gestalten, als dies bei nur einer, und demzufolge auch tiefer in die Pumpenwelle hineinragenden Nut, möglich gewesen wäre. Dadurch wird einer an dem Nutbereich herrschenden Bruchtendenz der Pumpenwelle wirkungsvoll entgegengewirkt. Auch sinkt die Mittelspannung in diesem Bereich analog.

Anders als nach dem Stand der Technik wird die große Axialkraft nicht in einer großen Nut, sondern in mehreren und kleineren Nuten in die Welle eingeleitet und gleich wieder umgeleitet in die entgegengesetzte Richtung. Diese Kraftumlenkung erzeugt im Nutradius der Welle hohe Spannungen. Bei der Mehrfachnut wird pro Nut nur ein kleiner Teil der Axialkraft ein- und umgeleitet und die restliche Axialkraft wird durchgeleitet. Dies reduziert die Spannung im Nutgrund deutlich und führt dazu, dass durch diese Neugestaltung der Nut die maximale Spannung im Nutgrund (auch: Nutboden) der Welle deutlich geringer ist, näherungsweise nämlich halbiert werden konnte.

Auch ist es möglich, durch die neuen und kleineren Nuten die Kontaktfläche zwischen der in die Nuten eingreifenden Entlastungseinrichtung und der Welle zu erhöhen. Somit sinkt die Flächenpressung in den Kontaktflächen signifikant. In ersten Berechnungen führt dies zu einer Verringerung der Flächenpressung in den Kontaktflächen um circa die Hälfte.

Erfindungsgemäß sind die mehreren Nuten durch jeweils voneinander separate umlaufende Nuten oder durch einen ein- bzw. mehrgängigen geschlossenen Gewindegang gebildet.

Dabei kann vorgesehen sein, dass die mehreren Nuten zwischen ihren Nutböden mindestens einen First definieren, der in seiner Höhe den äußeren Rändern des Nutbereichs entspricht. In anderen Worten führt dabei also jede der mehreren Nuten dazu, dass die mindestens eine sich zwischen den Nuten befindliche Erhöhung (gegenüber den Nutböden) auf demselben Höhenniveau angeordnet ist, wie die angrenzenden Bereiche des Nutbereichs. Die zwischen den Nuten angeordneten Firste sind also nicht auf einem tieferen Niveau angeordnet als die äußeren Ränder des Nutbereichs.

Erfindungsgemäß ist vorgesehen, dass ein jeweiliger Nutboden der mehreren Nuten in Längsschnittansicht kreissegmentförmig ausgestaltet ist. Dies führt zu einer vorteilhaften Ausnehmung, in der ein in den Nutboden eingreifendes Element eine hohe Axialkraft übertragen kann.

Dabei kann vorgesehen sein, dass die Radien der kreissegmentförmigen Nutböden unterschiedlich sind, wobei vorzugsweise ein solcher Radius einer am äußeren Rand des Nutbereichs angeordneten Nut größer als ein Radius einer in einem mittleren Abschnitt des Nutbereichs angeordneten Nut ist.

So kann eine am Rand des Nutbereichs angeordnete Nut einen Nutboden aufweisen, dessen kreissegmentförmiger Längsschnitt einen größeren Radius aufweist als ein anderer im Nutbereich angeordneter Nutboden. Besonders vorteilhaft ist es dabei, wenn die Nut mit dem größeren kreissegmentförmigen Nutboden an der zum Kolben der Pumpe gewandten Seite oder Rand des Nutbereichs angeordnet ist.

Die unterschiedlichen Radien in den kreissegmentförmigen Nutböden erlauben eine relativ gleichmäßige Krafteinleitung in die Pumpenwelle.

Nach einer weiteren optionalen Fortbildung der Erfindung kann vorgesehen sein, dass die Nuttiefen der mehreren Nuten unterschiedlich sind, wobei vorzugsweise eine Nuttiefe einer am äußeren Rand des Nutbereichs angeordneten Nut geringer als eine Nuttiefe einer anderen im Nutbereich angeordneten Nut ist. Dabei ist es von Vorteil, wenn die Nuttiefe derjenigen Nut geringer ist, die an der zum Kolben gewandten Seite des Nutbereichs angeordnet ist. Ferner kann aber auch vorgesehen sein, dass die Nuten am Rand (in Längsschnittrichtung gesehen) des Nutbereichs mit einem weniger tiefen Nutboden versehen sind als diejenige/n in einem mittleren Bereich des Nutbereichs.

Nach einer Modifikation der Erfindung kann vorgesehen sein, dass die mehreren Nuten in Längsrichtung der Pumpenwelle durch einen Pumpenwellenabschnitt voneinander getrennt sind, der in seinem Radius von der Rotationsachse der Pumpenwelle mit einem an den Nutbereich angrenzenden Radius der Pumpenwelle übereinstimmt.

Nach einer weiteren bevorzugten Ausführung stellen die mehreren Nuten in einer Längsschnittansicht der Pumpenwelle eine sägezahnartige Struktur dar, wobei vorzugsweise die jeweiligen Zahnspitzen der sägezahnartigen Struktur alle einen gleichen Radius zur Rotationsachse der Pumpenwelle aufweisen. Die sägezahnartige Struktur ist dabei mit ihren steilen Flanken zum Kolben der Pumpe gerichtet, da vom Kolben die in die Pumpenwelle einzuleitende Kraft herrührt.

Insbesondere eignen sich Nuten analog zum Sägezahngewinde nach DIN 2781, weil hierbei nahezu keine Radialkraft in eine in die Nuten eingreifende Entlastungseinrichtung einleiten, so dass eine solche Sägezahnform ideal für die vorliegende Belastung gestaltet ist.

Zudem kann nach der Erfindung vorgesehen sein, dass mindestens einer der jeweiligen Zahnböden der sägezahnartigen Struktur einen größeren Radius zur Rotationsachse der Pumpenwelle aufweist als mindestens ein anderer Zahnboden der sägezahnartigen Struktur.

Ebenfalls kann vorgesehen sein, dass der mindestens eine Zahnboden mit kleinerem Radius von einem in Längsschnittansicht gesehenen äußeren Rand des Nutbereichs durch mindestens einen Zahnboden mit größerem Radius getrennt ist, wobei vorzugsweise der mindestens eine Zahnboden mit kleinerem Radius von beiden in Längsschnittansicht gesehenen äußeren Rändern des Nutbereichs durch jeweils mindestens einen, vorzugsweise mindestens zwei Zahnboden mit größerem Radius getrennt ist.

Nach einer weiteren Fortbildung der Erfindung kann vorgesehen sein, dass angrenzend an den Nutbereich zum Eingreifen einer Entlastungseinrichtung eine Entlastungsnut in der Pumpenwelle vorgesehen ist, die nicht zum Eingreifen einer Entlastungsvorrichtung dient, wobei vorzugsweise an beiden äußeren Randbereichen des Nutbereichs eine Entlastungsnut in der Pumpenwelle vorgesehen ist.

Dies führt dazu, dass Spannungen in den Nuten der Welle reduziert werden, so dass eine noch widerstandsfähigere Ausgestaltung der Pumpenwelle erreicht wird.

Dabei kann vorgesehen sein, dass die mindestens Entlastungsnut eine ähnliche Tiefe wie die Nuten des Nutbereichs aufweist.

Die mindestens eine Entlastungsnut kann dabei entlang des Längsquerschnitts so ausgestaltet sein, dass sie an ihrer vom Nutbereich beabstandeten Nutseite steil abfällt und an ihrer zum Nutbereich zugewandten Nutseite weniger steil ausgestaltet ist.

Die Erfindung betrifft zudem eine Pumpe, insbesondere eine Kreiselpumpe, umfassend eine Pumpenwelle nach einer der vorhergehenden Varianten, und eine Entlastungseinrichtung, die in die mehreren Nuten des Nutbereichs eingreift, um eine in Axialrichtung der Pumpenwelle auf die Entlastungseinrichtung wirkende Kraft in die Pumpenwelle einzuleiten.

Erfindungsgemäß ist vorgesehen, dass die Entlastungseinrichtung ein Ring ist, der die Pumpenwelle in Umfangsrichtung umschließt, und an seinem Innenumfang ausgeformt ist, um in die mehreren Nuten des Nutbereichs einzugreifen. Dabei kann vorgesehen sein, dass die Entlastungseinrichtung ein geteilter Ring ist, der mit seinen zwei Teilringstücken in den Nutbereich eingreift. Anstatt des geteilten Rings kann die Entlastungseinrichtung aber auch mit einem analog ausgestalteten, einteiligen Ring ausgestattet sein. Dann liegt hier auch ein analoges Gewinde vor.

Nach einer optionalen Modifikation der Erfindung ist vorgesehen, dass die Entlastungseinrichtung in Längsschnittrichtung gesehen für mindestens eine oder alle Nuten des Nutbereichs ein Gangelement zum Eingreifen in eine entsprechende Nut aufweist.

Dabei kann vorgesehen sein, dass eines der mehreren Gangelemente radial gekürzt ist, also weniger tief zur Rotationsachse der Pumpenwelle vordringt als ein anderes Gangelement, wobei vorzugsweise ein solches radial gekürztes Gangelement in eine am Rand des Nutbereichs angeordnete Nut eingreift, insbesondere in die dem Kolben nächstliegende Nut des Nutbereichs.

Auch kann vorgesehen sein, dass es zwei radial gekürzte Gangelemente gibt, die aneinander angrenzen und in die beiden am Rand liegenden Nuten des Nutbereichs eingreifen, die vorzugsweise auf der dem Kolben abgewandten Seite des Nutbereichs liegen.

Der Kolben ist dabei auf derjenigen Seite des Nutbereichs angeordnet, die der in die Pumpenwelle einzuleitenden Kraft zugewandt ist und leitet diese Kraft in den geteilten Ring ein.

Vorzugsweise ist vorgesehen, dass die Gangelemente die in Nuten an den beiden Rändern des Nutbereichs eingreifen radial gekürzte Gangelemente sind. Es ist also auch möglich, dass an beiden Randabschnitten (bei Betrachtung in einer Längsschnittansicht), beide Randbereiche der Entlastungseinrichtung mit mindestens einem radial gekürzten Gangelement versehen sind und die ungekürzten Gangelemente nur in einem mittleren Abschnitt der Entlastungseinrichtung angeordnet sind.

Auch kann vorgesehen sein, dass die Gangelemente kreissegmentförmig ausgestaltet sind, wobei insbesondere ein Teil oder alle der radial gekürzten Gangelemente in ihrem Durchmesser größer sind als die radial normalen Gangelemente sind.

Vorzugsweise sind die Durchmesser derjenigen Gangelemente vergrößert ausgestaltet, die in Nuten eingreifen, die am äußeren Rand des Nutbereichs angeordnet sind. Auch möglich ist, dass ein solches Gangelement in ihrem Durchmesser vergrößert ist, und in die am Rand des Nutbereichs angeordnete Nut eingreift, die dem Kolben zugewandt ist.

Weitere Einzelheiten, Vorteile und Merkmale der Erfindung werden anhand der nachfolgenden Figurenbeschreibung ersichtlich. Dabei zeigen:
- Fig. 1:: eine Längsschnittansicht einer herkömmlichen Pumpe,
- Fig. 2:: einen vergrößerten Ausschnitt aus Fig. 1 im Bereich A,
- Fig. 3:: einen vergrößerten Ausschnitt um den Bereich einer Halteringnut einer Pumpe nach der Erfindung, und
- Fig. 4:: einen vergrößerten Ausschnitt aus Fig. 3 im Bereich Z.

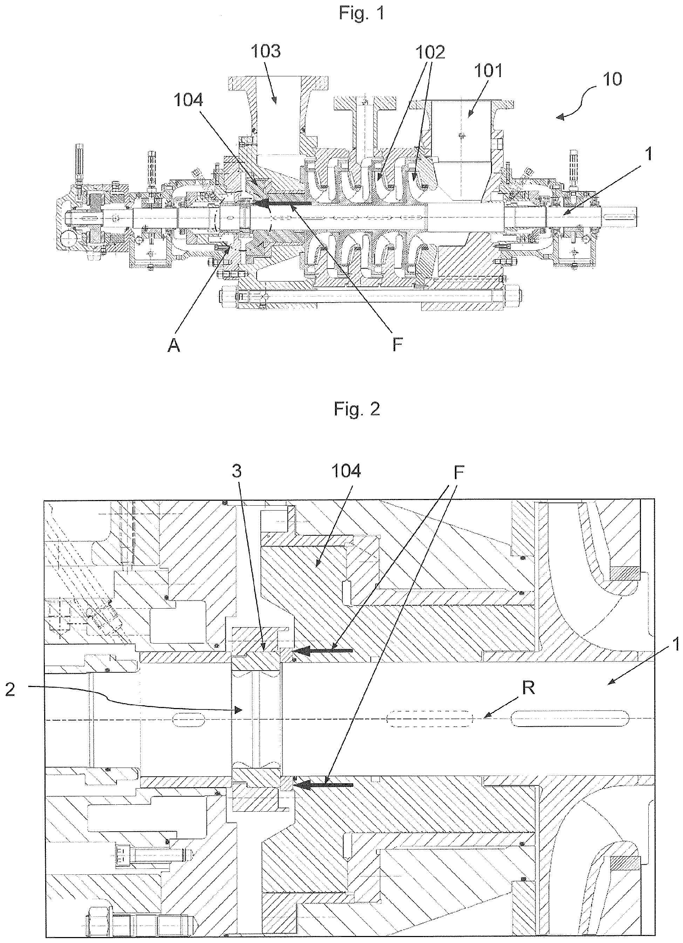

Fig. 1 zeigt einen Längsschnitt entlang der Pumpenwelle 1 einer Pumpe 10. Durch das Rotieren der Pumpenwelle 1 werden die Laufräder 102 in Drehung versetzt, die ein zu förderndes Fluid wegfördern. Dabei gibt es einen Zulauf 101 und mehrere in Reihe angeordnete Pumpenstufen, die jeweils mit um die Pumpenwelle 1 rotierenden Laufrädern 102 versehen sind.

Nach den stromabwärtigsten Laufrädern 102 verlässt das gepumpte Fluid die Pumpe 10 über einen Ablauf 103.

Beim Pumpen des Fluids entsteht eine zur Pumpenwelle parallele Kraft F, die über einen Kolben 104 in die Pumpenwelle 1 eingeleitet wird. Dadurch verhindert man eine unerwünschte Relativbewegung von Pumpenwelle und anderen Bauteilen der Pumpe 10.

Das Einleiten der Kraft F, erfolgt dabei durch eine Querschnittsverringerung der Pumpenwelle 1, in die eine Entlastungseinrichtung 3 eingreift. Diese ist in Axialrichtung der Pumpenwelle somit nicht verrückbar. Eine Rotation der Pumpenwelle 1 wird dadurch aber nicht beeinträchtigt.

Die Nut in der Pumpenwelle 1 der Pumpe 10 wird bedingt durch die Aufnahme des Axialschubes F hoch belastet und ist aus diesem Grund auch ein möglicher Ort eines Wellenbruchs.

Fig. 2 zeigt eine vergrößerte Ansicht der Bereichs A aus Fig. 1 in dem der Bereich um die Nut 4 vergrößert dargestellt ist. Man erkennt, dass der typischerweise vom Kolben 104 an die Entlastungseinrichtung 3 weitergegeben Axialschub F, also die in die Pumpenwelle 1 einzuleitende Kraft F, über den Nutbereich 2 in die Pumpenwelle 1 eingeleitet wird.

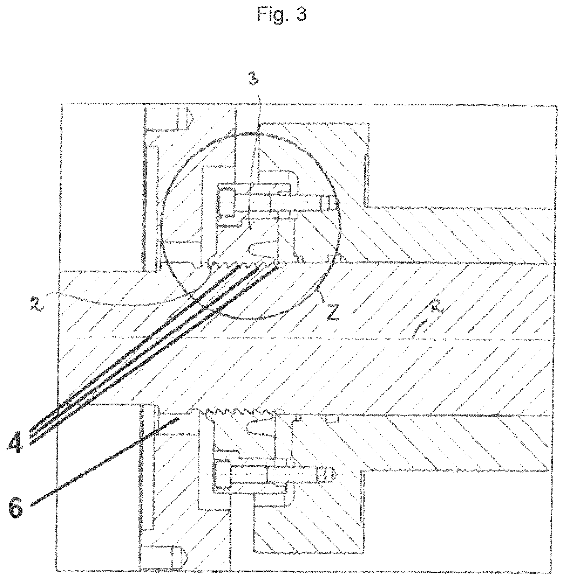

Fig. 3 zeigt eine erfindungsgemäße Ausgestaltung des Nutbereichs 2, bei dem nun mehrere Nuten 4 zur Aufnahme der Kraft F vorgesehen sind. Die Entlastungseinrichtung 3 ist dabei mit einem korrespondierenden Design versehen, so dass in die jeweiligen Nuten 4 ein Gangelement der Entlastungseinrichtung 3 eingreift. Dieses Eingreifen führt dazu, dass die abzuleitende Kraft F in die Pumpenwelle 1 eingeleitet wird, ohne besonders tief in den Querschnitt der Pumpenwelle 1 einzudringen. Dies ist vorteilhaft, da nun an dieser Stelle im Gegensatz zur Umsetzung mit nur einer Nut, eine stabilere Pumpenwelle 1 vorhanden ist, deren Stabilität deutlich vergrößert ist.

Zu beachten ist, dass die Entlastungseinrichtung nicht notwendigerweise zu 100-Prozent komplementär zu dem Nutbereich ausgestaltet sein muss.

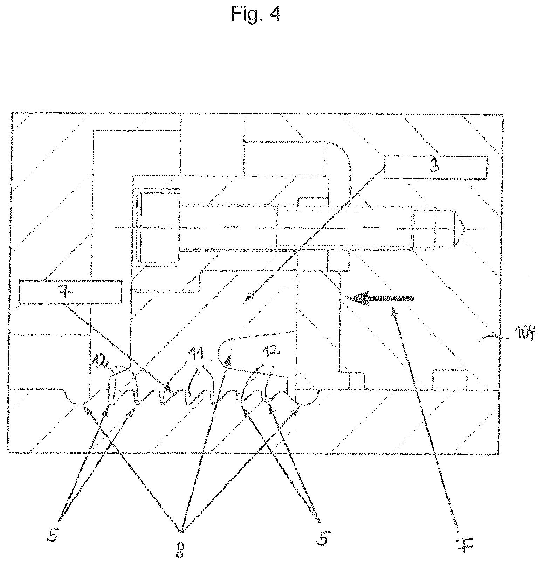

Wie man Fig. 4 entnehmen kann, kann es für ein gleichmäßiges Einleiten der Kraft F in die Pumpenwelle 1 von Vorteil sein, wenn die Gangelemente 11, 12 der Entlastungseinrichtung 3 zu ihren in Längsschnittrichtung gesehenen äußeren Rändern hin in Radialrichtung verkürzte Gangelemente 12 zum Eingreifen in die zugehörigen Nuten 5 aufweist. Dies wird vorliegend anhand einer sägezahnartigen Ausgestaltung 7 (in Längsschnittrichtung der Pumpenwelle) dargestellt.

Die Nuten 5 an den äußeren Rändern des Nutbereichs 2 können dabei genauso tief ausgeführt sein wie alle anderen Nuten. Es ist jedoch auch möglich, dass die Nuten am Rand des Nutbereichs 2, insbesondere an dem zum Kolben 104 zugewandten Rand weniger tief sind als andere Nuten 4.

Insbesondere sind die Nuten 5, welche an dem zum Kolben 104 zugewandten Rand angeordnet sind, in ihrem kreissegmentförmigen Boden mit einem größeren Radius versehen als die anderen im mittleren Bereich angeordneten Nuten 4.

So kann vorgesehen sein, dass die beiden rechten Gangelemente 12 radial gekürzt sind, so dass die beiden entsprechenden Nuten 5 in der Welle 1 weniger tief ausgeführt werden mussten und hier gleichzeitig größere Radien in ihren Nutböden 5 vorgesehen werden konnten. Dies reduziert die die Spannungen in den Nuten 4 der Welle 1.

Darüber hinaus sind auch Entlastungsnuten 8 vorgesehen, insbesondere in direkt angrenzender Nachbarschaft an die äußeren Ränder des Nutbereichs 2. Aber auch in der Entlastungseinrichtung 3 selbst kann eine solche Entlastungsnut 8 vorgesehen sein.

Diese ist dort dann eine sich zum Kolben 104 vergrößernde Ausnehmung, die dazu führt, dass jedes der Gangelemente 11, 12 gleich viel Kraft in die jeweils zugehörige Nut 4 einführt.

## Patentansprüche

1. Pumpenwelle (1) für eine mehrstufige Pumpe (10), insbesondere eine Kreiselpumpe, umfassend:
einen umlaufenden Nutbereich (2) zum Eingreifen einer einen Ring umfassenden Entlastungseinrichtung (3), um eine in Axialrichtung der Pumpenwelle (1) wirkende Kraft (F) in die Pumpenwelle (1) einzuleiten,
wobei der Nutbereich (2) in einer Längsschnittansicht der Pumpenwelle (1) mehrere in Axialrichtung voneinander beabstandete Nuten (4) aufweist.
**dadurch gekennzeichnet, dass**
die mehreren Nuten (4) durch jeweils voneinander separate umlaufende Nuten (4) oder durch einen ein- bzw. mehrgängigen geschlossenen Gewindegang gebildet sind, wobei ein jeweiliger Nutboden (5) der mehreren Nuten (4) in Längsschnittansicht kreissegmentförmig ausgestaltet ist.

2. Pumpenwelle (1) nach Anspruch 1, wobei die Radien der kreissegmentförmigen Nutböden (5) unterschiedlich sind, wobei vorzugsweise ein solcher Radius einer am äußeren Rand des Nutbereichs (2) angeordneten Nut (4) größer als ein Radius einer in einem mittleren Abschnitt des Nutbereichs (2) angeordneten Nut (4) ist.

3. Pumpenwelle (1) nach einem der vorhergehenden Ansprüche, wobei die Nutböden (5) der mehreren Nuten (4) unterschiedlich tief sind, wobei vorzugsweise eine Nutbodentiefe einer am äußeren Rand des Nutbereichs (2) angeordneten Nut (4) geringer als eine Nutbodentiefe einer in einem mittleren Abschnitt des Nutbereichs (2) angeordneten Nut (4) ist.

4. Pumpenwelle (1) nach einem der vorhergehenden Ansprüche, wobei die mehreren Nuten (4) in Längsrichtung der Pumpenwelle (1) durch einen Pumpenwellenabschnitt (6) voneinander getrennt sind, der in seinem Radius von der Rotationsachse (R) der Pumpenwelle (1) mit einem an den Nutbereich (2) angrenzenden Radius der Pumpenwelle (1) übereinstimmt.

5. Pumpenwelle (1) nach einem der vorhergehenden Ansprüche, wobei die mehreren Nuten (4) in einer Längsschnittansicht der Pumpenwelle (1) eine sägezahnartige Struktur (7) darstellen, wobei vorzugsweise die jeweiligen Zahnspitzen der sägezahnartigen Struktur (7) alle einen gleichen Radius zur Rotationsachse der Pumpenwelle (1) aufweisen.

6. Pumpenwelle (1) nach Anspruch 5, wobei mindestens einer der jeweiligen Zahnböden (5) der sägezahnartigen Struktur (7) einen größeren Radius zur Rotationsachse (R) der Pumpenwelle (1) aufweist als mindestens ein anderer Zahnboden (5) der sägezahnartigen Struktur (7).

7. Pumpenwelle (1) nach Anspruch 6, wobei der mindestens eine Zahnboden (5) mit kleinerem Radius von einem in Längsschnittansicht gesehenen äußeren Rand des Nutbereichs (2) durch mindestens einen Zahnboden (5) mit größerem Radius getrennt ist, wobei vorzugsweise der mindestens eine Zahnboden (5) mit kleinerem Radius von beiden in Längsschnittansicht gesehenen äußeren Rändern des Nutbereichs (2) durch jeweils mindestens einen, vorzugsweise mindestens zwei Zahnboden (5) mit größerem Radius getrennt ist.

8. Pumpenwelle (1) nach einem der vorhergehenden Ansprüche, wobei angrenzend an den Nutbereich (2) zum Eingreifen einer Entlastungseinrichtung (3) eine Entlastungsnut (8) in der Pumpenwelle (1) vorgesehen ist, die nicht zum Eingreifen einer Entlastungseinrichtung (3) dient, wobei vorzugsweise an beiden äußeren Randbereichen des Nutbereichs (2) eine Entlastungsnut (8) in der Pumpenwelle (1) vorgesehen ist.

9. Pumpe, insbesondere eine Kreiselpumpe, umfassend:
eine Pumpenwelle (1) nach einem der vorhergehenden Ansprüche,
eine Entlastungseinrichtung (3), die in die mehreren Nuten (4) des Nutbereichs (2) eingreift, um eine in Axialrichtung der Pumpenwelle (1) auf die Entlastungseinrichtung (3) wirkende Kraft (F) in die Pumpenwelle (1) einzuleiten, wobei die Entlastungseinrichtung (3) ein Ring ist, der die Pumpenwelle (1) in Umfangsrichtung umschließt, und an seinem Innenumfang ausgeformt ist, um in die mehreren Nuten (4) des Nutbereichs (2) einzugreifen.

10. Pumpe nach Anspruch 9, **dadurch gekennzeichnet, dass** der Ring ein geteilter Ring ist, der mit seinen zwei Teilringstücken in den Nutbereich (2) eingreift.

11. Pumpe (10) nach einem der vorhergehenden Ansprüche 9 oder 10, wobei die Entlastungseinrichtung (3) in Längsschnittrichtung gesehen für mindestens eine oder alle Nuten (4) des Nutbereichs (2) ein Gangelement (11, 12) zum Eingreifen in eine entsprechende Nut (4) aufweist.

12. Pumpe (10) nach Anspruch 11, wobei mindestens eines der mehreren Gangelemente (12) radial gekürzt ist, also weniger tief zur Rotationsachse der Pumpenwelle (1) vordringt als andere Gangelemente (11), wobei vorzugsweise ein solches radial gekürztes Gangelement (12) in eine am Rand des Nutbereichs (2) angeordnete Nut (4) eingreift.

13. Pumpe (10) nach Anspruch 11 oder 12, wobei die Gangelemente (11, 12) die in Nuten (4) an den beiden Rändern des Nutbereichs (2) eingreifen radial gekürzte Gangelemente (12) sind.

## Claims

1. Pump shaft (1) for a multi-stage pump (10), in particular a centrifugal pump, comprising:
a circumferential groove region (2) for engagement of a load-relieving device (3) which comprises a ring, in order to impart a force (F) acting in the axial direction of the pump shaft (1) to the pump shaft (1),
wherein the groove region (2) has, in a view of the pump shaft (1) in longitudinal section, a plurality of grooves (4) spaced apart from one another in the axial direction, **characterized in that** the plurality of grooves (4) are formed by respective circumferential grooves (4) separated from one another or by a single-start or multi-start closed screwthread, wherein a respective groove base (5) of the plurality of grooves (4) is configured in the shape of a segment of a circle, viewed in a longitudinal section.

2. Pump shaft (1) according to Claim 1, wherein the radii of the groove bases (5) in the shape of segments of a circle are different, wherein such a radius of a groove (4) arranged at the outer edge of the groove region (2) is preferably larger than a radius of a groove (4) arranged in a central section of the groove region (2).

3. Pump shaft (1) according to one of the preceding claims, wherein the groove bases (5) of the plurality of grooves (4) have different depths, wherein preferably a groove base depth of a groove (4) arranged at the outer edge of the groove region (2) is preferably less than a groove base depth of a groove (4) arranged in a central section of the groove region (2).

4. Pump shaft (1) according to one of the preceding claims, wherein the plurality of grooves (4) are separated from one another in the longitudinal direction of the pump shaft (1) by a pump shaft section (6) with a radius from the axis of rotation (R) of the pump shaft (1) which coincides with a radius of the pump shaft (1) which adjoins the groove region (2).

5. Pump shaft (1) according to one of the preceding claims, wherein the plurality of grooves (4) represent, in a view of the pump shaft (1) in longitudinal section, a sawtooth structure (7), wherein the respective tooth tips of the sawtooth structure (7) preferably all have the same radius with respect to the axis of rotation of the pump shaft (1).

6. Pump shaft (1) according to Claim 5, wherein at least one of the respective tooth bases (5) of the sawtooth structure (7) has a larger radius with respect to the axis of rotation (R) of the pump shaft (1) than at least one other tooth base (5) of the sawtooth structure (7).

7. Pump shaft (1) according to Claim 6, wherein the at least one tooth base (5) with a smaller radius is separated from an outer, viewed in a longitudinal section, edge of the groove region (2) by at least one tooth base (5) with a larger radius, wherein the at least one tooth base (5) with a smaller radius is preferably separated from both outer, viewed in a longitudinal section, edges of the groove region (2) by in each case at least one tooth base (5), preferably at least two tooth bases (5), with a larger radius.

8. Pump shaft (1) according to one of the preceding claims, wherein a load-relieving groove (8), which does not serve for engagement of a load-relieving device (3), is provided in the pump shaft (1), adjoining the groove region (2) for engagement of a load-relieving device (3), wherein a load-relieving groove (8) is preferably provided in the pump shaft (1) at both outer edge regions of the groove region (2).

9. Pump, in particular a centrifugal pump, comprising: a pump shaft (1) according to one of the preceding claims, a load-relieving device (3) which engages in the plurality of grooves (4) of the groove region (2) in order to impart a force (F), acting on the load-relieving device (3) in the axial direction of the pump shaft (1), to the pump shaft (1), wherein the load-relieving device (3) is a ring which surrounds the pump shaft (1) in the circumferential direction and is formed on its inner circumference in order to engage in the plurality of grooves (4) of the groove region (2).

10. Pump according to Claim 9, **characterized In that** the ring is a split ring which engages with its two partial ring pieces in the groove region (2).

11. Pump (10) according to one of the preceding Claims 9 or 10, wherein the load-relieving device (3) has, viewed in a longitudinal section, a thread element (11, 12) for engagement in a corresponding groove (4) for at least one or all the grooves (4) of the groove region (2).

12. Pump (10) according to Claim 11, wherein at least one of the plurality of thread elements (12) is radially shortened, i.e. penetrates less deeply with respect to the axis of rotation of the pump shaft (1) than other thread elements (11), wherein such a radially shortened thread element (12) preferably engages in a groove (4) arranged at the edge of the groove region (2).

13. Pump (10) according to Claim 11 or 12, wherein the thread elements (11, 12) are the radially shortened thread elements (12) engage in grooves (4) at the two edges of the groove region (2).

## Revendications

1. Arbre de pompe (1) pour une pompe (10) à plusieurs étages, en particulier une pompe centrifuge, comprenant :
une zone de rainure circonférentielle (2), pour l'engagement d'un dispositif de décharge (3) comprenant une bague, afin d'introduire dans l'arbre de pompe (1) une force (F) agissant dans la direction axiale de l'arbre de pompe (1),
la zone de rainure (2) comprenant, vue en coupe longitudinale de l'arbre de pompe (1), plusieurs rainures (4) espacées les unes des autres dans le sens axial,
caractérisé en ce
les rainures (4) de la pluralité de rainures sont formées par des rainures (4) circonférentielles séparées les unes des autres ou par un filetage fermé à un ou plusieurs filets, le fond de chaque rainure (5) de la pluralité de rainures (4) ayant la forme d'un segment de cercle en coupe longitudinale.

2. Arbre de pompe (1) selon la revendication 1, dans lequel les rayons des fonds de rainure en forme de segment de cercle (5) sont différents, de préférence le rayon d'une rainure (4) située sur le bord extérieur de la zone de rainure (2) est plus grand que le rayon d'une rainure (4) située dans une partie centrale de la zone de rainure (2).

3. Arbre de pompe (1) selon l'une des revendications précédentes, dans lequel les fonds (5) des rainures de la pluralité de rainures (4) ont des profondeurs différentes, de préférence la profondeur du fond d'une rainure (4) située sur le bord extérieur de la zone de rainure (2) étant inférieure à la profondeur du fond d'une rainure (4) située dans une partie centrale de la zone de rainure (2).

4. Arbre de pompe (1) selon l'une des revendications précédentes, dans lequel les rainures de la pluralité de rainures (4) sont séparées les unes des autres dans la direction longitudinale de l'arbre de pompe (1) par une partie d'arbre de pompe (6), dont le rayon à partir de l'axe de rotation (R) de l'arbre de pompe (1) correspond à un rayon de l'arbre de pompe (1) adjacent à la zone de rainure (2).

5. Arbre de pompe (1) selon l'une des revendications précédentes, dans lequel les rainures de la pluralité de rainures (4) forment une structure en dents de scie (7) selon une vue en coupe longitudinale de l'arbre de pompe (1), les sommets respectifs des dents de la structure en dents de scie (7) ayant de préférence tous le même rayon par rapport à l'axe de rotation de l'arbre de pompe (1).

6. Arbre de pompe (1) selon la revendication 5, dans lequel au moins un des fonds de dent respectifs (5) de la structure en dents de scie (7) comprend un rayon plus grand par rapport à l'axe de rotation (R) de l'arbre de pompe (1) qu'au moins un autre fond de dent (5) de la structure en dents de scie (7).

7. Arbre de pompe (1) selon la revendication 6, dans lequel ledit au moins un fond de dent (5) de plus petit rayon est séparé d'un bord extérieur de la zone de rainure (2) vu en coupe longitudinale par au moins un fond de dent (5) de plus grand rayon, de préférence, ledit au moins un fond de dent (5) de plus petit rayon étant séparé des deux bords extérieurs de la zone de rainure (2) vus en coupe longitudinale par au moins un fond, de préférence au moins deux fonds, de dent (5) de plus grand rayon.

8. Arbre de pompe (1) selon l'une des revendications précédentes, dans lequel une rainure de décharge (8), laquelle ne sert pas à l'engagement d'un dispositif de décharge (3), est prévue dans l'arbre de pompe (1) à côté de la zone de rainure (2) pour l'engagement d'un dispositif de décharge (3), une rainure de décharge (8) étant de préférence prévue dans l'arbre de pompe (1) au niveau des deux zones de bord extérieures de la zone de rainure (2).

9. Pompe, en particulier pompe centrifuge, comprenant :
un arbre de pompe (1) selon l'une des revendications précédentes,
un dispositif de décharge (3) qui vient en engagement dans les rainures de la pluralité de rainures (4) de la zone de rainures (2) afin d'introduire dans l'arbre de pompe (1) une force (F) agissant dans le sens axial de l'arbre de pompe (1) sur le dispositif de décharge (3), le dispositif de décharge (3) étant une bague qui entoure l'arbre de pompe (1) dans la direction circonférentielle et qui est formé sur sa circonférence intérieure de manière à venir en engagement dans la pluralité de rainures (4) de la zone de rainures (2).

10. Pompe selon la revendication 9, **caractérisée en ce que** la bague est une bague fendue qui vient en engagement avec ses deux pièces de bague dans la zone de rainure (2).

11. Pompe (10) selon l'une des revendications 9 ou 10 précédentes, le dispositif de décharge (3) comprenant, vu dans la direction de la coupe longitudinale, pour au moins une rainure ou toutes les rainures (4) de la zone de rainures (2), un élément de liaison (11, 12) destiné à venir en engagement dans une rainure (4) correspondante.

12. Pompe (10) selon la revendication 11, dans laquelle au moins un élément parmi les plusieurs éléments de liaison (12) est raccourci radialement, c'est-à-dire qu'il pénètre moins profondément dans l'axe de rotation de l'arbre de pompe (1) que d'autres éléments de liaison (11), de préférence un tel élément de liaison (12) raccourci radialement venant en engagement dans une cannelure (4) aménagée sur un bord de la zone de rainure (2).

13. Pompe (10) selon la revendication 11 ou la revendication 12, dans lequel les éléments de liaison (11, 12) étant les éléments de liaison (12) raccourcis radialement qui viennent en engagement dans des rainures (4) sur les deux bords de la zone de rainure (2).
